# EUROPÄISCHE PATENTANMELDUNG

(11) **EP 3 789 150 A1**
(43) Veröffentlichungstag der Anmeldung: **10.03.2021**
(21) Anmeldenummer: 19195360.3
(22) Anmeldetag: 04.09.2019
(51) Int. Cl.: B23K 9/09, B23K 9/095, B23K 9/167, B23K 9/173, B23K 9/29

(54) **VERFAHREN UND SCHWEISSVORRICHTUNG ZUM DURCHFÜHREN EINES MEHRFACH-SCHWEISSVERFAHRENS**

(71) Anmelder: FRONIUS INTERNATIONAL GmbH, 4643 Pettenbach (AT)
(72) Erfinder: Die Erfindernennung liegt noch nicht vor
(74) Vertreter: Patentanwälte Pinter & Weiss OG

(57) **Zusammenfassung**

Um ein Verfahren zur Durchführung eines Mehrfach-Schweißverfahrens sowie eine Schweißvorrichtung (1) zur Durchführung eines Mehrfach-Schweißverfahrens mit zumindest zwei Elektroden (EA, EB) anzugeben, die eine möglichst gleichbleibende Schweißqualität und stabile Schweißprozesse gewährleisten, ist erfindungsgemäß vorgesehen, dass vor Beginn oder nach Beendigung des Mehrfach-Schweißverfahrens ein Prüfparameter an einen der zumindest zwei Schweißstromkreise angelegt wird und in zumindest einem anderen Schweißstromkreis zumindest ein elektrischer Schweißparameter erfasst wird, wobei eine elektrisch leitende Verbindung (20) zwischen den zumindest zwei Schweißstromkreisen erkannt wird, wenn der erfasste Schweißparameter vom Prüfparameter beeinflusst wird und ein vorgegebenes Prüfkriterium erfüllt oder dass während des Mehrfach-Schweißverfahrens in jedem Schweißstromkreis zumindest ein elektrischer Schweißparameter erfasst wird, wobei eine elektrisch leitende Verbindung (20) zwischen den zumindest zwei Schweißstromkreisen erkannt wird, wenn sich die erfassten Schweißparameter (Pi) zeitgleich ändern.

## Beschreibung

Die Erfindung betrifft ein Verfahren zur Durchführung eines Mehrfach-Schweißverfahrens, bei dem an einem Werkstück mit zumindest zwei Elektroden mit jeweils einem Schweißstromkreis jeweils ein Schweißprozess durchgeführt wird. Weiters betrifft die Erfindung eine Schweißvorrichtung zur Durchführung eines Mehrfach-Schweißverfahrens.

Derzeit gibt es eine Reihe von gängigen Schweißverfahren im Stand der Technik. Beispielsweise sind Metall-Schutzgas-Schweißprozesse (MSG) seit vielen Jahren bekannt. Dazu zählen z.B. das Metall-Inert-Gas Verfahren (MIG) oder auch das Metall-Aktiv-Gas Verfahren (MAG), bei welchen eine abschmelzende Elektrode aus einem metallischen Elektrodenwerkstoff von einem sogenannten Schutzgas umgeben wird. Metall-Schutzgas-Schweißprozesse werden in der Regel entweder dazu verwendet, auf einen Grundwerkstoff eine Schweißnaht aufzubringen (Auftragsschweißen) oder dazu zwei Grundwerkstoffe zu verbinden (Verbindungsschweißen). In beiden Fällen wird mittels einer elektrischen Spannung bzw. einem daraus resultierenden elektrischen Strom ein Lichtbogen zwischen der Elektrode und dem Grundwerkstoff gezündet, welcher die Elektrode und den, den Lichtbogen umgebenden Bereich des Grundwerkstoffs abschmilzt, wodurch eine stoffschlüssige Verbindung hergestellt wird. Als Elektrodenmaterial wird üblicherweise dasselbe oder ein ähnliches Material wie für den Grundwerkstoff verwendet. Die Elektrode wird mit einer bestimmten Elektroden-Vorschubgeschwindigkeit der Schweißstelle zugeführt, wobei die Elektroden-Vorschubgeschwindigkeit fest vorgegeben werden kann, z.B. beim manuellen Schweißen per Hand oder auch von anderen Parametern abhängig sein kann, beispielsweise von einer Schweißgeschwindigkeit, mit der die Elektrode relativ zum Grundwerkstoff bewegt wird oder in Abhängigkeit des Stroms, etc.

Das Schutzgas dient dazu, den Lichtbogen und den Bereich der Schmelze von der Atmosphäre abzuschirmen, im Wesentlichen um eine Oxidation zu vermeiden. Als Schutzgas wird entweder ein inertes Gas (MIG) verwendet oder ein aktives Gas (MAG). Inerte Gase, beispielsweise Helium (He) oder Argon (Ar), sind solche Gase, die keine chemischen Reaktionen mit der Schmelze eingehen. Das MIG-Verfahren wird vorwiegend für Nichteisenmetalle und hochlegierte Stähle genutzt. Aktive Gase, wie beispielsweise Kohlendioxid (CO2) oder Sauerstoff (O) sind reaktionsfreudige Gase, die verwendet werden, um die Zusammensetzung der Schmelze bewusst zu verändern. Sie werden bevorzugt für unlegierte und niedriglegierte Stähle verwendet.

Ein weiteres bekanntes Schweißverfahren ist das sogenannte Wolfram-Inertgas-Schweißen (WIG-Schweißen oder im englischen Sprachgebrauch Tungsten Inert-Gas Welding (TIG)). Im Gegensatz zu den oben genannten MSG-Verfahren wird beim WIG-Verfahren eine Wolfram-Elektrode mit einem sehr hohen Schmelzpunkt verwendet, sodass die Elektrode beim Schweißen nicht abschmilzt. Der Schweißzusatzwerkstoff wird dementsprechend separat in Form eines drahtförmigen Zusatzstoffes der Schweißstelle zugeführt. Der Schweißzusatzwerkstoff wird im Lichtbogen abgeschmolzen, der zwischen der Wolfram-Elektrode und dem Grundwerkstoff brennt. Als Schutzgase werden analoge inerte Schutzgase wie beim MIG-Verfahren verwendet.

Um beispielsweise die Abschmelzleistung zu erhöhen oder verschiedene Zusatzstoffe einer Schweißstelle zuführen zu können, sind im Stand der Technik auch Mehrfach-Schweißprozesse bekannt. Beispielsweise zeigt die WO 97/45227 A1 ein Tandem-MSG-Schweißverfahren, bei dem mehrere parallel zueinander verlaufende Schweißdrähte als abschmelzende Elektroden einem gemeinsamen Schweißbrenner zugeführt werden. Die Schweißdrähte sind elektrisch voneinander getrennt und werden jeweils in einem sogenannten Kontaktrohr geführt. Jeder Schweißdraht weist eine separate Vorschubeinheit zum Zuführen des Schweißdrahtes zur Schweißstelle, sowie einen eigenen Schweißstromkreis mit einer Schweißstromquelle auf. Dadurch kann mit jedem Schweißdraht ein eigener, im Wesentlichen vom jeweils anderen Schweißdraht unabhängiger, Schweißprozess durchgeführt werden. Dadurch kann die Abschmelzleistung im Vergleich zu herkömmlichen MSG-Schweißverfahren mit nur einem Schweißdraht erhöht werden. In einem Mehrfachschweißverfahren können aber natürlich auch mehr als zwei Schweißprozesse ausgeführt werden.

Um einen definierten Schweißprozess an einer Elektrode durchzuführen, werden in der Regel bestimmte Schweißparameter am Schweißgerät eingestellt, beispielsweise von einer geeigneten Steuerungseinheit eines Schweißgeräts. Solche Schweißparameter sind z.B. eine Schweißspannung, ein Schweißstrom und eine Schweißdrahtvorschubgeschwindigkeit der abschmelzenden Elektrode (MIG/MAG) oder des Zusatzstoffs (WIG), wobei für verschiedene Schweißprozesse des Mehrfachschweißprozesses verschiedene Schweißparameter eingestellt werden können. Das Schweißgerät kann auch eine elektrische Messgröße während der Durchführung des Schweißprozesses, beispielsweise die Schweißspannung, den Schweißstrom, oder einen elektrischen Widerstand des Schweißstromkreises erfassen.

Die erfasste Messgröße kann dann vom Schweißgerät verarbeitet werden, um den Schweißprozess zu überwachen, zu steuern bzw. zu regeln. Bekannte Schweißprozesse, die mit einem Schweißgerät durchgeführten werden, sind beispielsweise ein Impulsschweißprozess, ein Kurzlichtbogenschweißprozess oder ein Kurzlichtbogenschweißprozess mit reversierender Drahtelektrode (z.B. ein sogenannter Kalt-Metall-Transfer-Schweißprozess), wobei es natürlich auch noch weitere Schweißprozesse wie z.B. Sprühlichtbogen-Schweißprozess, Mixprozesse, Schweißprozess mit rotierendem Lichtbogen, etc. gibt. Bei den genannten Schweißprozessen kann eine definierte zyklische Schweißstromänderung im jeweiligen Schweißstromkreis erfolgen, welche zu einer verbesserten Tropfenablöse der abschmelzenden Elektrode oder des Zusatzstoffs führt.

Ein gängiges Problem bei solchen Mehrfach-Schweißprozessen ist, dass sich bedingt durch Schweißspritzer zwischen zwei oder mehreren dicht nebeneinander angeordneten Elektroden sogenannte Spritzer-Brücken aus dem Material der Schweißelektrode (MSG) oder des Zusatzstoffs (WIG) bilden können. Diese Spritzer-Brücken bilden sich beim genannten Tandem-Schweißprozess beispielsweise zwischen den benachbarten Kontaktrohren des Schweißbrenners aus, durch welche die Schweißdrähte geführt werden. Dies kann dazu führen, dass es zu einer unerwünschten elektrischen Verbindung zwischen den ansonsten elektrisch voneinander isolierten Kontaktrohren und damit zu einer elektrisch leitenden Verbindung der beiden getrennten Schweißstromkreise kommt. Dadurch kann es zu einer gegenseitigen Beeinflussung der Schweißstromkreise kommen, was zu instabilen Schweißprozessen führen kann. Eine Folge davon kann beispielsweise sein, dass keine garantierte Tropfenablöse mehr erfolgt, was zu einer verminderten Schweißqualität führen kann.

Es ist deshalb die Aufgabe der Erfindung, ein Verfahren zur Durchführung eines Mehrfach-Schweißverfahrens sowie eine Schweißvorrichtung zur Durchführung eines Mehrfach-Schweißverfahrens mit zumindest zwei Elektroden anzugeben, die eine möglichst gleichbleibende Schweißqualität und stabile Schweißprozesse gewährleisten.

Die Aufgabe wird erfindungsgemäß dadurch gelöst, dass vor Beginn oder nach Beendigung des Mehrfach-Schweißverfahrens ein Prüfparameter an einen der zumindest zwei Schweißstromkreise angelegt wird und in zumindest einem anderen Schweißstromkreis zumindest ein elektrischer Schweißparameter erfasst wird, wobei eine elektrisch leitende Verbindung zwischen den zumindest zwei Schweißstromkreisen erkannt wird, wenn der erfasste Schweißparameter vom Prüfparamater beeinflusst wird und ein vorgegebenes Prüfkriterium erfüllt oder dass während des Mehrfach-Schweißverfahrens in jedem Schweißstromkreis zumindest ein elektrischer Schweißparameter erfasst wird, wobei eine elektrisch leitende Verbindung zwischen den zumindest zwei Schweißstromkreisen erkannt wird, wenn sich die erfassten Schweißparameter zeitgleich ändern. Dadurch kann eine elektrisch leitende Verbindung zwischen zwei Schweißstromkreisen zuverlässig erkannt werden, die beispielsweise durch eine während des Schweißvorgangs zwischen zwei Elektroden aus Schweißspritzern gebildete Spritzerbrücke entsteht.

Vorzugsweise wird für zumindest eine Elektrode eine abschmelzende Elektrode in Form eines Schweißdrahts vorgesehen, wobei der Schweißdraht einer Schweißstelle am Werkstück zugeführt und durch einen vom jeweiligen Schweißprozess gesteuerten, zwischen dem Schweißdraht und dem Werkstück brennenden Lichtbogen an der Schweißstelle abgeschmolzen wird, um eine Schweißnaht auszubilden. Dadurch kann an einer oder an mehreren Elektroden z.B. das bekannte MIG/MAG-Schweißverfahren durchgeführt werden.

Weiters ist es vorteilhaft, wenn für zumindest eine Elektrode eine nicht abschmelzende Elektrode vorgesehen wird, wobei einer Schweißstelle am Werkstück ein Zusatzstoff zugeführt wird und wobei der Zusatzstoff durch einen vom jeweiligen Schweißprozess gesteuerten, zwischen der nicht abschmelzende Elektrode und dem Werkstück brennenden Lichtbogen an der Schweißstelle abgeschmolzen wird, um eine Schweißnaht auszubilden. Dadurch kann an einer oder an mehreren Elektroden z.B. das bekannte WIG-Schweißverfahren durchgeführt werden.

Für zumindest einen Schweißprozess einer Elektrode wird vorzugsweise ein Impulsschweißprozess, ein Schweißprozess mit reversierendem Schweißdrahtvorschub, ein Sprühlichtbogenschweißprozess, ein Schweißprozess mit rotierendem Lichtbogen oder ein Kurzlichtbogenschweißprozess verwendet. Damit kann eine elektrisch leitende Verbindung bei den gängigsten Schweißprozessen erkannt werden.

Bevorzugterweise wird als elektrischer Schweißparameter ein Schweißstrom, eine Schweißspannung, ein Schweißwiderstand oder eine Periodendauer oder Impulsfrequenz eines Schweißzyklus eines Schweißprozesses verwendet oder eine davon abgeleitete Größe, vorzugsweise eine Schweißleistung und/oder es wird als Prüfparameter eine Prüfspannung, ein Prüfstrom oder eine davon abgeleitete Größe vorgesehen. Damit können in einfacher Weise bekannte Größen als Schweißparameter und/oder Prüfparameter verwendet werden, um eine Spritzerbrücke zu detektieren.

Wenn an zumindest einer Elektrode ein stromgeführter Schweißprozess verwendet wird, bei dem ein Schweißstrom des Schweißstromkreises geregelt wird oder ein spannungsgeführter Schweißprozess verwendet wird, bei dem eine Schweißspannung des Schweißstromkreises geregelt wird, ist es vorteilhaft, wenn beim stromgeführten Schweißprozess ein vom Schweißstrom verschiedener elektrischer Schweißparameter erfasst wird und beim spannungsgeführten Schweißprozess ein von der Schweißspannung verschiedener elektrischer Schweißparameter erfasst wird, um die elektrisch leitende Verbindung zu erkennen. Dadurch kann vermieden werden, dass für die Erkennung einer Spritzerbrücke Schweißparameter herangezogen werden, die sich aufgrund der Regelung unter Umständen nicht oder nur sehr gering ändern würden.

Es ist vorteilhaft, wenn bei Erkennung der elektrisch leitenden Verbindung zwischen den zumindest zwei Schweißstromkreisen vor Beginn oder nach Beendigung des Mehrfach-Schweißverfahrens ein vorzugsweise analoges, digitales, akustisches, optisches oder haptisches Signal erzeugt wird und/oder bei Erkennung der elektrisch leitenden Verbindung zwischen den zumindest zwei Schweißstromkreisen während des durchgeführten Mehrfach-Schweißverfahrens das Mehrfach-Schweißverfahren unterbrochen wird und/oder ein vorzugsweise analoges, digitales, akustisches, optisches oder haptisches Signal erzeugt wird. Dadurch kann einem Benutzer oder einer übergeordneten Steuerung, wie z.B. einem Schweißroboter, das Vorliegen einer elektrisch leitenden Verbindung signalisiert werden. Der Benutzer, Schweißroboter, etc. kann dann entsprechend geeignete Maßnahmen ergreifen, beispielsweise eine Reinigung der Schweißvorrichtung vornehmen.

Die Aufgabe wird weiters mit einer Schweißvorrichtung dadurch gelöst, dass die Steuerungseinheit zumindest einer Elektrode dazu vorgesehen ist, vor Beginn oder nach Beendigung des Mehrfach-Schweißverfahrens einen Prüfparameter an den Schweißstromkreis der jeweiligen Elektrode anzulegen und dass die Steuerungseinheit zumindest einer anderen Elektrode dazu vorgesehen ist, zumindest einen elektrischen Schweißparameter im Schweißstromkreis der jeweiligen Elektrode zu erfassen und wobei die Schweißvorrichtung vorgesehen ist, eine elektrisch leitende Verbindung zwischen den zumindest zwei Schweißstromkreisen zu erkennen, wenn der erfasste Schweißparameter vom Prüfparameter beeinflusst ist und ein vorgegebenes Prüfkriterium erfüllt ist oder dass die Steuerungseinheiten der zumindest zwei Elektroden dazu vorgesehen sind, während des Mehrfach-Schweißverfahrens jeweils zumindest einen elektrischen Schweißparameter in ihrem Schweißstromkreis zu erfassen und dass die Schweißvorrichtung vorgesehen ist, eine elektrisch leitende Verbindung zwischen den zumindest zwei Schweißstromkreisen zu erkennen, wenn sich die erfassten Schweißparameter zeitgleich ändern.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 den grundlegenden Aufbau eines Schweißbrenners mit zwei Elektroden zur Durchführung eines Mehrfach-Schweißverfahrens,
Fig.2 zeitliche Verläufe der Schweißspannungen der Schweißstromkreise der beiden Elektroden in einer ersten Ausführungsform des erfindungsgemäßen Verfahrens,
Fig.3 zeitliche Verläufe der Schweißparameter Pi der Schweißstromkreise der beiden Elektroden in einer zweiten Ausführungsform des erfindungsgemäßen Verfahrens,
Fig.4 ein elektrisches Ersatzschaltbild einer Schweißvorrichtung.

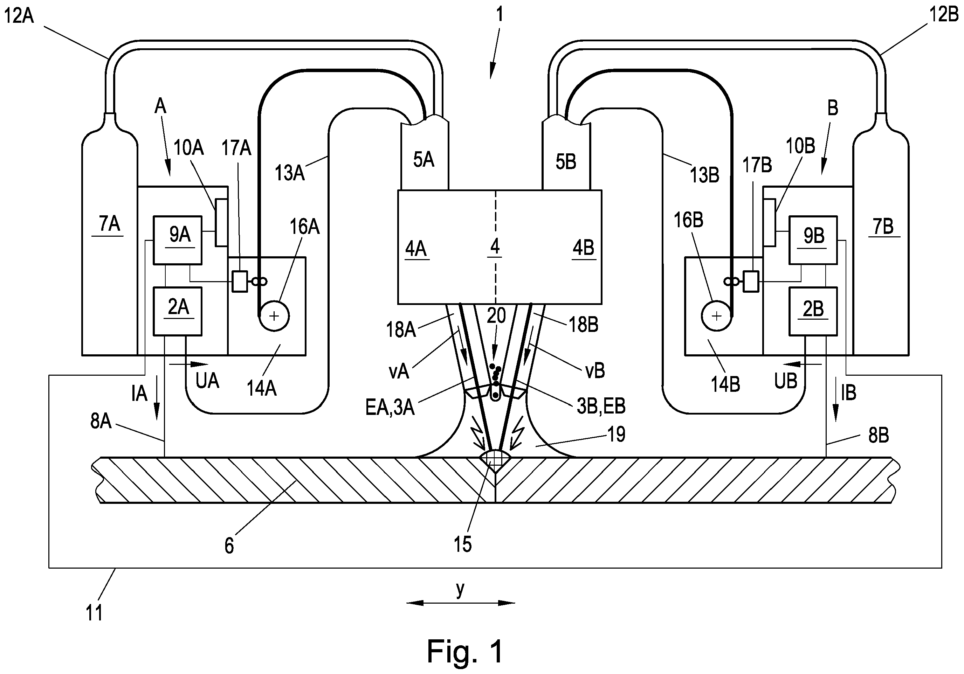

In Fig.1 ist eine Schweißvorrichtung 1 mit zwei voneinander unabhängigen Schweißgeräten A, B vereinfacht dargestellt. Die Schweißgeräte A, B sind hier als Schweißgeräte mit abschmelzender Elektrode ausgestaltet (MIG/MAG-Schweißen). Grundsätzlich könnte aber auch ein oder mehrere Schweißgeräte mit nicht abschmelzender Elektrode (WIG-Schweißen) mit automatischem Schweißdrahtvorschub eines Zusatzwerkstoffes verwendet werden. Im gezeigten Beispiel wird mit beiden Schweißgeräten A, B jeweils ein Schweißprozess an einem gemeinsamen Werkstück 6 durchgeführt. Natürlich könnten auch mehr als zwei Schweißgeräte A, B vorgesehen sein, für das Verständnis der Erfindung ist die Anordnung von zwei Schweißgeräten A, B jedoch ausreichend. Die Schweißgeräte A, B müssen auch nicht zwingend als separate Einheiten ausgeführt sein, sondern es wäre auch denkbar, dass die zwei (oder mehrere) Schweißgeräte A, B beispielsweise in einem gemeinsamen Gehäuse angeordnet sind. Das ändert aber nichts daran, dass jedes Schweißgerät A, B für sich einen eigenen Schweißstromkreis zur Durchführung eines Schweißprozesses ausbildet.

Die Schweißgeräte A, B weisen jeweils eine Schweißstromquelle 2A, 2B, jeweils eine Schweißdrahtvorschubeinheit 14A, 14B sowie einen gemeinsamen Schweißbrenner 4 (MIG/MAG-Schweißgeräte) auf, an dem die Elektroden angeordnet sind. Die Schweißstromquellen 2A, 2B stellen jeweils die benötigte Schweißspannung UA, UB zur Verfügung, die jeweils über ein Kontaktrohr 18A, 18B an einen Schweißdraht 3A, 3B als abschmelzende Elektrode angelegt wird (oder an eine nicht abschmelzende Elektrode im Falle eines Schweißverfahrens mit nicht abschmelzender Elektrode wie z.B. WIG-Schweißen). Der Schweißdraht 3A, 3B wird einem gemeinsamen Schweißbrenner 4 mittels der Schweißdrahtvorschubeinheit 14A, 14B mit einer bestimmten Schweißdrahtvorschubgeschwindigkeit vA, vB zugeführt.

Die Zuführung kann beispielsweise innerhalb eines Schlauchpakets 5A, 5B oder auch außerhalb davon erfolgen. Die Schweißdrahtvorschubeinheit 14A, 14B kann jeweils im Schweißgerät A, B integriert sein, kann aber auch eine separate Einheit sein, so wie in Fig.1 dargestellt. Innerhalb der Schweißdrahtvorschubeinheit 14A, 14B kann beispielsweise eine Drahtrolle 16A, 16B vorgesehen sein, auf welcher der Schweißdraht 3A, 3B aufgewickelt ist. Der Schweißdraht 3A, 3B könnte aber beispielsweise auch in einem Behälter wie z.B. einem Fass angeordnet sein und von dort dem Schweißbrenner 4 zugeführt werden. Weiters kann eine geeignete Antriebseinheit 17A, 17B vorgesehen sein, die von der Steuerungseinheit 9A, 9B angesteuert wird, um den Schweißdraht 3A, 3B von der Drahtrolle 16A, 16B oder aus dem Behälter abzuwickeln und dem Schweißbrenner 4 mit einer Schweißdrahtvorschubgeschwindigkeit vA, vB zuzuführen.

Zur Durchführung eines Schweißprozesses wird jeweils ein Lichtbogen zwischen dem Schweißdraht 3A, 3B und dem Werkstück 6 gezündet, wie hier durch die Blitze dargestellt ist. Durch den Lichtbogen wird einerseits das Material des Werkstücks 6 lokal aufgeschmolzen und ein sogenanntes Schmelzbad 15 erzeugt. Andererseits wird der Schweißdraht 3A, 3B mittels einer bestimmten Schweißdrahtvorschubgeschwindigkeit vA, vB dem Schmelzbad 15 zugeführt und vom Lichtbogen abgeschmolzen, um Material des Schweißzusatzstoffes (hier der Schweißdrähte 3A, 3B als abschmelzende Elektroden) auf das Werkstück 6 aufzutragen. Bei Bewegung des Schweißbrenners 4 relativ zum Werkstück 6 kann dadurch eine Schweißnaht ausgebildet werden (in Fig.1 beispielsweise in Richtung normal auf die Zeichenebene).

Im jeweiligen Schlauchpaket 5A, 5B können gegebenenfalls auch weitere Leitungen zwischen dem Schweißgerät A, B und dem Schweißbrenner 4 (beispielsweise eine nicht dargestellte Steuerleitung oder eine Kühlmittelleitung) vorgesehen sein. Meist wird ein Schutzgas verwendet, um das Schmelzbad 15 durch eine Schutzgasglocke 19 vor der Umgebungsluft, insbesondere dem darin enthaltenen Sauerstoff abzuschirmen, um eine Oxidation zu vermeiden. Dabei kommen in der Regel inerte Gase (z.B. Argon), aktive Gase (z.B. CO2) oder Gemische davon zum Einsatz, welche dem Schweißbrenner 4 ebenfalls über das jeweilige Schlauchpaket 5A, 5B mittels geeigneter Schutzgasleitungen 12A, 12B zugeführt werden können. Die Schutzgase sind üblicherweise in separaten (Druck-)Behältern 7A, 7B gelagert, welche z.B. über geeignete Leitungen den Schweißgeräten A, B (oder direkt dem Schweißbrenner 4) zugeführt werden können. Bei Verwendung des gleichen Schutzgases könnte auch ein gemeinsamer Behälter für beide (alle) Schweißgeräte A, B vorgesehen sein. Natürlich kann ggf. auch ohne Schutzgas geschweißt werden. Das Schlauchpaket 5A, 5B kann an den Schweißbrenner 4 und am Schweißgerät A, B z.B. über geeignete Kupplungen angekoppelt werden.

Um jeweils einen Schweißstromkreis der Schweißgeräte A, B auszubilden, sind die Schweißstromquellen 2A, 2B jeweils mit einer Masseleitung 8A, 8B mit dem Werkstück 6 verbunden. Ein Pol der Schweißstromquelle 2A, 2B, üblicherweise der Minuspol, ist mit der Masseleitung 8A, 8B verbunden. Der andere Pol der Schweißstromquelle 2A, 2B, üblicherweise der Pluspol, ist über eine geeignete Stromleitung 13A, 13B mit dem Kontaktrohr 18A, 18B verbunden (oder umgekehrt). Das Kontaktrohr 18A, 18B, durch das jeweils die Drahtelektrode 3A, 3B geführt wird, überträgt den Strom auf die abzuschmelzende Elektrode EA, EB (bzw. den Schweißdraht 3A, 3B). Damit bildet sich für jeden Schweißprozess über den Lichtbogen und das Werkstück 6 ein Schweißstromkreis aus.

In den Schweißgeräten A, B ist auch jeweils eine Steuerungseinheit 9A, 9B vorgesehen, die den jeweiligen Schweißprozess inkl. des jeweiligen Schweißdrahtvorschubs steuert und überwacht. Hierfür sind in der Steuerungseinheit 9A, 9B für den Schweißprozess benötigte Schweißparameter, wie beispielsweise die Schweißdrahtvorschubgeschwindigkeit vA, vB, der Schweißstrom IA, IB, die Schweißspannung UA, UB, die Impulsfrequenz, die Impulsstromdauer, etc. vorgegeben oder einstellbar. Zum Steuern des Schweißprozesses ist die Steuerungseinheit 9A, 9B mit der Schweißstromquelle 2A, 2B und der Schweißdrahtvorschubeinheit 14A, 14B (z.B. insbesondere der Antriebseinheit 17A, 17B) verbunden.

Zur Eingabe oder zur Anzeige gewisser Schweißparameter Pi oder eines Schweißstatus kann auch eine mit der Steuerungseinheit 9A, 9B verbundene Benutzerschnittstelle 10A, 10B vorgesehen sein. Weiters könnte auch eine geeignete (nicht dargestellte) Schnittstelle am Schweißgerät A, B vorgesehen sein, über welche das Schweißgerät A, B mit einer externen Steuerungseinheit verbunden werden kann, über die das Schweißgerät A, B gesteuert wird. Beispielsweise könnte eine (nicht dargestellte) zentrale Steuerungseinheit vorgesehen sein, welche mit beiden Schweißgeräten A, B (oder mehreren Schweißgeräten) verbunden ist und über welche die Schweißprozesse der Schweißgeräte A, B gesteuert werden können. Die beschriebenen Schweißgeräte A, B sind natürlich hinlänglich bekannt, weshalb an dieser Stelle nicht mehr näher darauf eingegangen wird.

Der gemeinsame Schweißbrenner 4 im dargestellten Beispiel ist so ausgeführt, dass die zumindest zwei Elektroden EA, EB in einer vorgegebenen Position relativ zueinander fest am Schweißbrenner 4 angeordnet sind, sodass die Schweißdrähte 3A, 3B einem gemeinsamen Schmelzbad 15 zugeführt werden. Der Schweißbrenner 4 könnte aber auch so ausgestaltet werden, dass die Schweißdrähte 3A, 3B am Werkstück 6 in zwei getrennte Schmelzbäder arbeiten anstatt in ein gemeinsames Schmelzbad 15, wie in Fig.1 dargestellt. Es könnten aber auch zwei separate Schweißbrenner 4A, 4B vorgesehen werden, wie in Fig.1 gestrichelt angedeutet ist, die relativ zueinander fix oder beweglich angeordnet sind.

Beispielsweise könnte die beiden Schweißbrenner 4A, 4B an einem (nicht dargestellten) Schweißroboter angeordnet werden, der beide Schweißbrenner 4A, 4B führt. Die Anordnung kann aber auch veränderlich sein, beispielsweise in dem je ein Schweißbrenner 4A, 4B von einem Schweißroboter geführt wird. Anstatt eines Schweißroboters kann natürlich auch eine andere geeignete Manipulationsvorrichtung vorgesehen sein, beispielsweise eine Art Portalkran, der vorzugsweise eine Bewegung in mehreren, vorzugsweise drei Achsen ermöglicht. Es ist dabei unerheblich, ob mit den Schweißbrennern 4, 4A, 4B ein Verbindungsschweißen oder ein Auftragsschweißen, oder ein sonstiges Schweißverfahren, realisiert wird. Natürlich wäre auch ein manuelles Schweißen per Hand möglich.

Die Steuerungseinheiten 9A, 9B der Schweißgeräte A, B sind vorzugsweise mittels einer Kommunikationsverbindung 11 verbunden, über die eine Synchronisationsinformation Y einseitig oder wechselseitig zwischen den Schweißgeräten A, B ausgetauscht werden kann. Die Kommunikationsverbindung 11 kann beispielsweise eine drahtgebundene oder drahtlose Verbindung zwischen den Steuerungseinheiten 9A, 9B oder zwischen den Benutzerschnittstellen 10A, 10B sein, z.B. ein hinlänglich bekannter Datenbus. Beispielsweise könnten die Schweißgeräte A, B und/oder der Schweißroboter, der den Schweißbrenner 4 bewegt (oder mehrere Schweißroboter für mehrere Schweißbrenner 4A, 4B) miteinander über eine geeignete (nicht dargestellte) Kommunikationsverbindung kommunizieren und an eine zentrale Steuerungseinheit angeschlossen sein.

Eine Synchronisationsinformation Y kann beispielsweise Informationen über Schweißparameter Pi der mit den Schweißgeräten A, B durchgeführten Schweißprozesse beinhalten, beispielsweise Informationen über die Größe oder den zeitlichen Verlauf der Schweißspannung UA, UB, des Schweißstroms IA, IB, der Drahtvorschubgeschwindigkeit vA, vB, oder beispielsweise Informationen über eine Periodendauer oder eine Impulsfrequenz eines Impulsschweißprozesses etc. Durch den Austausch von Synchronisationsinformationen Y kennt eine Steuerungseinheit 9A, 9B die relevanten Schweißparameter Pi der jeweils anderen Steuerungseinheit 9A, 9B, wodurch die durchgeführten Schweißprozesse z.B. zeitlich aufeinander abgestimmt werden können. Beispielsweise könnten an beiden Elektroden identische Schweißprozesse mit quantitativ identischen Schweißparametern durchgeführt werden, die lediglich um eine Phasenverschiebung zeitlich zueinander verschoben sind.

Die Kommunikationsverbindung 11 ist für die Erfindung aber nur optional und ist z.B. vorzugsweise dann vorgesehen, wenn mit beiden Schweißgeräten A, B jeweils ein Impulsschweißprozess durchgeführt wird. Durch den Austausch von Synchronisationsinformationen Y zwischen den Steuerungseinheiten 9A, 9B können die Impulsschweißprozesse (die auch unterschiedliche Schweißparameter Pi aufweisen können) aufeinander synchronisiert werden. Bei anderen Schweißprozessen, wie z.B. einem Sprühlichtbogenprozess ist es nicht zwingend notwendig, die beiden Sprühlichtbogenprozesse aufeinander abzustimmen. Auf eine Kommunikationsverbindung 11 kann in diesem Fall deshalb auch verzichtet werden. Wenn mit den beiden (oder mehreren) Schweißgeräten A, B aber jeweils verschiedene Schweißprozesse durchgeführt werden können (was in der Regel der Fall ist), ist es aber vorteilhaft, wenn eine Kommunikationsverbindung 11 zwischen den Steuerungseinheiten 9A, 9B, ...n der Schweißgeräte A, B, ...n vorgesehen ist (n ist ein allgemeiner Index und steht für die Anzahl der einzelnen Schweißgeräte). Die Kommunikationsverbindung 11 kann dann in vorteilhafter Weise auch für das erfindungsgemäße Verfahren zur Erkennung einer elektrisch leitenden Verbindung 20 verwendet werden.

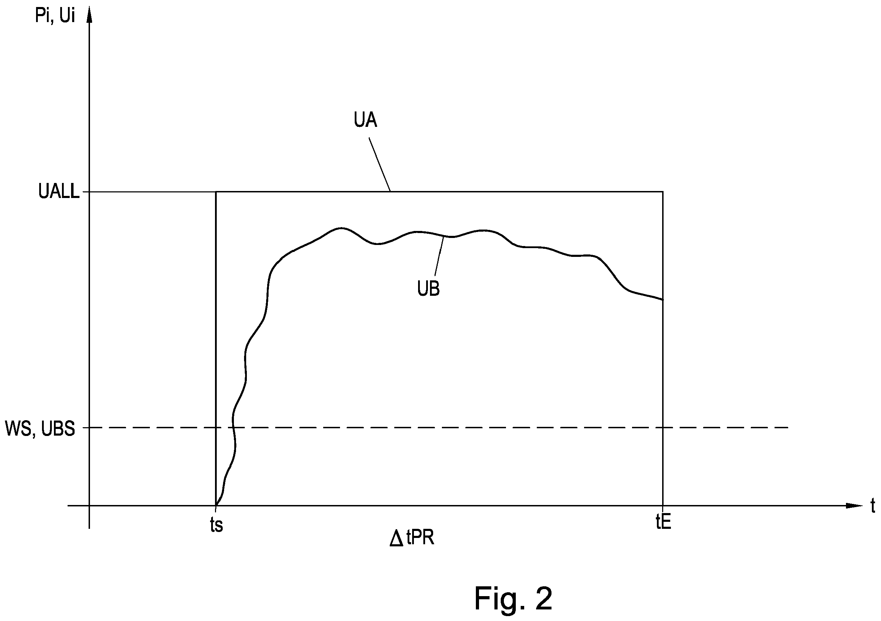

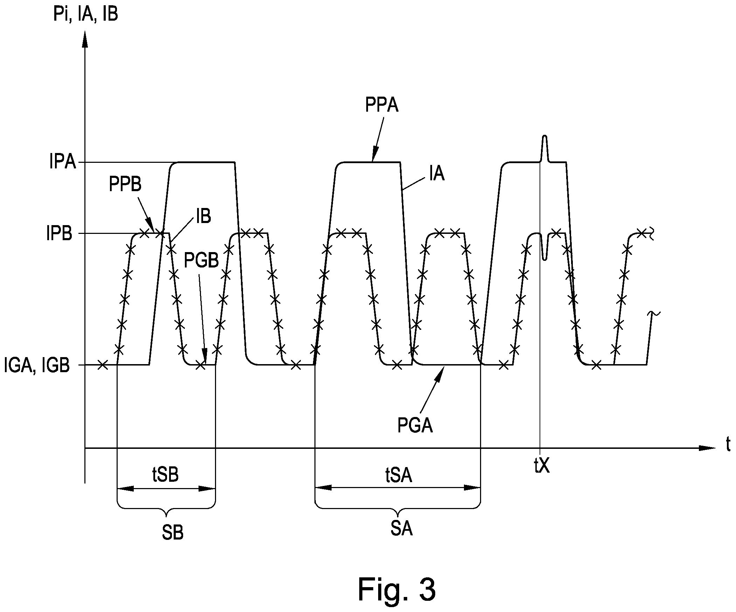

Während des Schweißens bilden sich in der Regel Schweißspritzer, die sich aus dem Schmelzbad 15 lösen und in Richtung des Schweißbrenners 4 bewegen. Diese Schweißspritzer können beispielsweise an den Kontaktrohren 18A, 18B haften bleiben und erstarren. Solche Schweißspritzer sind Tropfen aus geschmolzenem Metall und können z.B. eine Mischung aus dem Material des Werkstücks 6 und/oder dem Material der Schweißdrähte 3A, 3B sein. Ein solches Anhaften der Schweißspritzer an den Kontaktrohren 18A, 18B ist grundsätzlich unproblematisch. Allerdings kann es nach einiger Zeit, beispielsweise nach mehreren längeren Schweißarbeiten dazu führen, dass sich eine oder mehrere sogenannte Spritzer-Brücken zwischen den Kontaktrohren 18A, 18B (oder anderen stromführenden Teilen der Elektroden) am Schweißbrenner 4 ausbilden, wie in Fig.1 angedeutet ist. Solche Spritzer-Brücken können zu einer elektrisch leitenden Verbindung 20 zwischen den normalerweise elektrisch voneinander isolierten Schweißstromkreisen der (hier zwei) Elektroden EA, EB führen. Eine solche elektrisch leitende Verbindung 20 ist natürlich unerwünscht, weil diese zu einem instabilen Schweißprozess an einer oder mehreren Elektroden EA, EB führen kann. Durch das erfindungsgemäße Verfahren kann eine solche elektrisch leitende Verbindung 20 wirksam erkannt werden, wie nachfolgend anhand Fig.2 und Fig.3 noch näher erläutert wird.

In Fig.2 ist eine erste Ausführungsform der Erfindung anhand eines Diagramms der Spannungen Ui der (hier) zwei Schweißstromkreise über der Zeit t dargestellt (i ist ein allgemeiner Index und steht für die einzelnen Schweißstromkreise). Gemäß der ersten Ausführungsform wird vor Beginn oder nach Beendigung des Mehrfach-Schweißverfahrens (also nicht während des Mehrfach-Schweißverfahrens) ein Prüfparameter an einen der zumindest zwei Schweißstromkreise angelegt. Der Prüfparameter kann dabei beispielsweise eine bestimmte vorgegebene elektrische Größe sein, insbesondere eine Prüfspannung Uip, ein Prüfstrom oder auch eine davon abgeleitete Größe. Als Prüfspannung Uip kann dabei z.B. eine Leerlaufspannung UiLL, eine andere konstante Spannung Ui festgelegter Höhe oder auch ein beliebiger festgelegter zeitlicher Verlauf U(t) einer Spannung Ui sein, z.B. ein sinusförmiger oder pulsförmiger Verlauf o.ä. Die Leerlaufspannung UiLL zeichnet sich beispielsweise im Wesentlichen dadurch aus, dass keine Last am Schweißstromkreis anliegt, dass also kein Lichtbogen gezündet wird. In analoger Weise könnte natürlich auch eine andere konstante oder zeitlich veränderliche elektrische Größe als Prüfparameter verwendet werden.

Im gezeigten Beispiel wird als Prüfparameter eine Prüfspannung Uip, hier in Form einer Leerlaufspannung UALL, an den Schweißstromkreis des ersten Schweißgeräts A angelegt, natürlich könnte aber auch eine (nicht dargestellte) Prüfspannung (oder ein anderer Prüfparameter) an den Schweißstromkreis des zweiten Schweißgeräts B angelegt werden (oder an den Schweißstromkreis eines weiteren Schweißgeräts, wenn die Schweißvorrichtung 1 mehr als zwei Elektroden bzw. Schweißgeräte aufweist). Im jeweils zumindest einen anderen Schweißstromkreis, hier im Schweißstromkreis des Schweißgeräts B, wird zumindest ein elektrischer Schweißparameter Pi des Schweißstromkreises erfasst, hier beispielsweise die Spannung UB, wobei alternativ auch ein Strom oder ein elektrischer Widerstand, oder ein anderer geeigneter elektrischer Schweißparameter erfasst werden könnte. Ein elektrischer Schweißparameter Pi könnte beispielsweise auch eine aus anderen Schweißparametern Pi abgeleitete Größe sein, wie z.B. die Schweißleistung PSi=Ui*Ii.

Oftmals wird zur Steuerung/Regelung eines Schweißprozesses ohnehin ein Schweißparameter Pi im jeweiligen Schweißstromkreis erfasst und von der Steuerungseinheit verarbeitet, sodass in diesem Fall keine separate Messeinrichtung erforderlich ist. Natürlich könnte die Erfassung aber beispielsweise durch eine geeignete Messeinrichtung erfolgen, die mit der jeweiligen Steuerungseinheit 9A, 9B kommuniziert.

Eine elektrisch leitende Verbindung 20 zwischen den zumindest zwei Schweißstromkreisen wird dann erkannt, wenn der erfasste Schweißparameter Pi (hier die Spannung UB) ein bestimmtes Prüfkriterium in Reaktion auf den Prüfparameter erfüllt (hier z.B. in Reaktion auf die Leerlaufspannung UALL als Prüfspannung Uip). Im dargestellten Beispiel ist als Prüfkriterium ein bestimmter vorgegebener Schwellenwert WS (hier Schwellenspannung UBS) vorgesehen und die elektrisch leitende Verbindung 20 wird erkannt, wenn der Schwellenwert WS erreicht oder überschritten wird. Als Prüfkriterium könnte aber auch eine Funktion des Prüfparameters, hier z.B. eine Funktion f(Uip) der Leerlaufspannung UALL als Prüfspannung Uip vorgesehen sein, die erfüllt sein muss, um die elektrisch leitende Verbindung 20 zu detektieren.

Beispielsweise könnte auch eine Elektrode (z.B. der Schweißdraht 3A) das Werkstück 6 berühren die andere(n) Elektrode(n) (hier z.B. Schweißdraht 3B) berührt das Werkstück 6 nicht. Der Schweißstromkreis der nicht berührenden Elektrode (Schweißdraht 3B) kann dann z.B. mit einem Prüfstrom als Prüfparameter beaufschlagt werden. Im Normalfall (aufgrund der elektrisch voneinander isolierten Schweißstromkreise) fließt dabei kein Strom im Schweißstromkreis der berührenden Elektrode (Schweißdraht 3A). Liegt allerdings eine elektrisch leitende Verbindung 20 zwischen den Schweißstromkreisen in Form einer Spritzer-Brücke vor, wird im Schweißstromkreis der berührenden Elektrode (Schweißdraht 3A) ein Strom fließen. Gemäß der Erfindung kann dieser Strom als Schweißparameter Pi im Schweißstromkreis der berührenden Elektrode (Schweißdraht 3A) erfasst werden und es kann die elektrisch leitende Verbindung 20 erkannt werden, wenn der Strom ein bestimmtes Prüfkriterium erfüllt (z.B. Erreichen/Überschreiten eines vorgegebenen Schwellenwerts WS).

Als Prüfparameter könnte beispielsweise auch eine Prüfspannung Uip in Form einer sinusförmigen Spannung an einen Schweißstromkreis angelegt werden und als Prüfkriterium könnte eine zu erwartende sinusförmige Antwort des erfassten Schweißparameters Pi im jeweils anderen Schweißstromkreis als Funktion f(Uip) vorgesehen sein. Die elektrisch leitende Verbindung 20 wird dann erkannt, wenn die Steuerungseinheit 9i (oder eine geeignete Messeinrichtung) des Schweißstromkreises, in dem der Schweißparameter Pi erfasst wird einen dem vorgegebenen Prüfkriterium entsprechenden Verlauf des Schweißparameters Pi feststellt. Wenn eine Kommunikationsverbindung 11 zwischen den Steuerungseinheiten 9i vorgesehen ist, könnte aber beispielsweise auch die Steuerungseinheit 9i des Schweißstromkreises, an den der Prüfparameter (hier die Leerlaufspannung UALL als Prüfspannung Uip) angelegt wird, den erfassten Schweißparamater Pi im jeweils anderen Schweißstromkreis als Synchronisationssignal Y von der erhalten und die elektrisch leitende Verbindung 20 selbst erkennen. Es könnte natürlich auch eine (nicht dargestellte) externe Prüfeinheit vorgesehen werden, die mit der/den Steuerungseinheit/en 9i kommuniziert, um Informationen über den/die erfassten Schweißparamater Pi zu erhalten. Damit könnte die Erkennung der elektrisch leitenden Verbindung 20 durch die Prüfeinheit erfolgen.

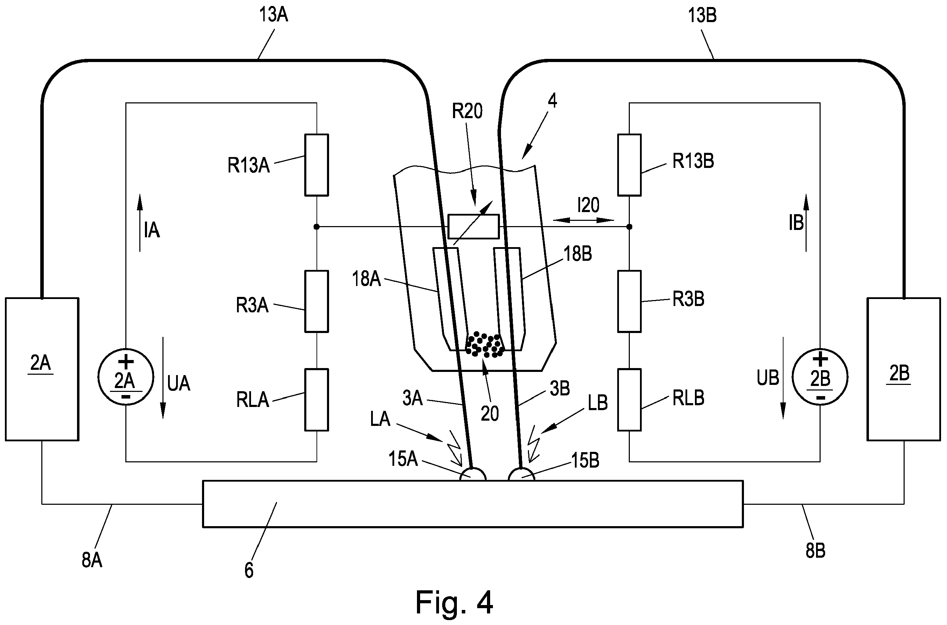

Im dargestellten Beispiel ist zwischen einem Prüfbeginn ts und einem Prüfende tE ein Prüfzeitraum ΔtPR festgelegt. Während des Prüfzeitraums ΔtPR wird die die Prüfspannung Uip in Form der Leerlaufspannung UALL als Prüfparameter an den Schweißstromkreis des Schweißgeräts A angelegt und der Schweißparameter Pi im jeweils anderen Schweißstromkreis erfasst bzw. gemessen, hier die Spannung UB. Die Höhe der Leerlaufspannung UALL und die Dauer des Prüfzeitraums ΔtPR kann fest eingestellt sein, z.B. über ein in der Steuerungseinheit 9A implementiertes Prüfprogramm oder kann auch vorgegeben werden, beispielsweise über die jeweilige Benutzerschnittstelle 10A. Ohne elektrischer Verbindung 20 wirkt sich die Leerlaufspannung UALL in einem Schweißstromkreis nicht auf den Schweißstromkreis des anderen Schweißstromkreises aus. Mit elektrischer Verbindung 20 hingegen sehr wohl, wobei die Art und die Auswirkung der Beeinflussung im Wesentlichen vom Ohm'schen Widerstand R20 (siehe Fig.4) der elektrischen Verbindung 20 abhängig sein wird.

Wenn die Schwellenspannung UBS (als Prüfkriterium) erreicht oder überschritten wird, bedeutet das, dass eine elektrisch leitende Verbindung 20 zwischen den beiden Schweißstromkreisen besteht, die insbesondere hervorgerufen durch eine Spritzer-Brücke zwischen den Kontaktrohren 18A, 18B des Schweißbrenners 4 (Fig.1). Die Höhe des Schwellenwerts WS, hier der Schwellenspannung UBS kann natürlich ebenfalls voreingestellt sein, beispielsweise in einem in der Steuerungseinheit 9B implementierten Prüfprogramm oder kann auch vorgegeben werden, beispielsweise über die Benutzerschnittstelle 10B. Im einfachsten Fall kann z.B. ein Schwellenwert WS=0, hier eine Schwellenspannung UBS=0 vorgesehen sein, die überschritten werden muss, um eine Spritzerbrücke zu erkennen. Denkbar wäre z.B. auch, dass der Schwellenwert WS während einer bestimmten vorgegebenen oder einstellbaren Zeit durchgehend erreicht werden muss, um eine gültige Erkennung der elektrisch leitenden Verbindung 20 auszulösen. Dadurch könnte vermieden werden, dass kurze Spitzen des erfassten Schweißparameters Pi als elektrisch leitende Verbindung 20 erkannt werden, die Z.B. durch äußere Störeinflüsse ausgelöst werden können.

Denkbar wäre beispielsweise, dass nur in der Steuerungseinheit 9i des Schweißstromkreises, an den der Prüfparameter (hier die Leerlaufspannung UiLL als Prüfspannung Uip) angelegt wird ein Prüfprogramm implementiert ist. Das Prüfprogramm könnte dann entweder manuell von einem Benutzer gestartet werden oder vorzugsweise auch automatisch. Beispielsweise könnte ein automatisierter Start des Prüfprogramms nach jedem Einschaltvorgang der Schweißvorrichtung 1 erfolgen. Wenn das Prüfprogramm gestartet wird, könnte die Steuerungseinheit 9i (hier 9A) z.B. eine entspreche Synchronisationsinformation Y an die Steuerungseinheit 9i (hier 9B) des zumindest einen anderen Schweißgeräts (hier B) senden, um der Steuerungseinheit 9B den Start tS des Prüfprogramms zu signalisieren. Die Steuerungseinheit 9B startet bei Erhalt der Synchronisationsinformation Y vorzugsweise verzögerungsfrei mit der Erfassung des Schweißparameters Pi im Schweißstromkreis des zweiten Schweißgeräts B, hier der Spannung UB. Zur Beendigung des Prüfprogramms kann erneut eine Synchronisationsinformation Y von der Steuerungseinheit 9A an die Steuerungseinheit 9B gesendet werden. Dadurch kennt die Steuerungseinheit 9B den Endzeitpunkt tE und beendet die Erfassung des Schweißparameters.

Wird das Prüfkriterium nicht erfüllt, z.B. wenn der gemessene Wert des Schweißparameters Pi (hier Schweißspannung UB) unter dem voreingestellten Schwellenwert WS (hier Schwellenspannung UBS) liegt, bedeutet das, dass keine elektrisch leitende Verbindung 20 zwischen den Schweißstromkreisen durch eine Spritzer-Brücke vorliegt. Damit kann das Mehrfach-Schweißverfahren z.B. normal fortgesetzt werden, wenn die Prüfung vor Beginn des Mehrfach-Schweißverfahrens erfolgt ist. Durch die Festlegung eines Schwellenwerts WS > 0 können beispielsweise hinreichend kleine Werte Pi < WS eines gemessenen Schweißparameters Pi bei der Erkennung der elektrisch leitenden Verbindung 20 vernachlässigt werden. Dadurch können z.B. sehr geringe gemessene Werte eines Schweißparameters Pi außer Acht gelassen werden, die beispielsweise durch eine elektromagnetische Induktion hervorgerufen werden können.

Wenn das vorgegebene Prüfkriterium erfüllt ist, beispielsweise weil der gemessene Schweißparameter Pi den Schwellenwert WS erreicht oder übersteigt, bedeutet das, dass eine elektrisch leitende Verbindung 20 zwischen den Schweißstromkreisen durch eine Spritzer-Brücke vorliegt. In diesem Fall ist es vorteilhaft, wenn der Schweißbrenner 4 gereinigt wird, bevor das Mehrfach-Schweißverfahren gestartet wird. Beispielsweise könnte eine Reinigungsstation mit einer Reinigungseinrichtung vorgesehen sein, in welche der Schweißbrenner 4 bewegt wird. Dies kann manuell durch einen Benutzer erfolgen oder vorzugsweise automatisiert, z.B. durch einen Schweißroboter. Im einfachsten Fall könnte aber ein Benutzer den Schweißbrenner 4 optisch kontrollieren und eine Spritzer-Brücke mit einem geeigneten Werkzeug per Hand entfernen. Insbesondere bei zeitkritischen Schweißarbeiten kann unter Umständen aber auch auf die Reinigung verzichtet werden und das Mehrfach-Schweißverfahren trotz erkannter Spritzer-Brücke ggf. mit einer geringeren Schweißqualität durchgeführt werden.

Eine positive Prüfung (im Sinne einer Nicht-Erkennung einer elektrisch leitenden Verbindung 20 zwischen den Schweißstromkreisen) und/oder eine negative Prüfung (im Sinne einer Erkennung einer elektrisch leitenden Verbindung 20 zwischen den Schweißstromkreisen) kann dem Benutzer in vorteilhafter Weise auch mittels einer geeigneten Signalisierungseinheit signalisiert werden, beispielsweise durch ein akustisches, optisches oder haptisches Signal. Die Signalisierungseinheit kann dabei z.B. in der Schweißvorrichtung 1 integriert sein, beispielsweise in Form einer Lampe oder eines Lautsprechers, etc. Wenn die Benutzerschnittstelle 10A, 10B in Form eines Displays ausgeführt ist, könnte auch eine Signalnachricht am Display eingeblendet werden. Denkbar wäre auch eine haptische Rückmeldung an den Schweißer, z.B. in Form einer Vibration des Schweißbrenners 4. Es könnte aber auch ein analoges oder digitales Signal ausgegeben werden, das z.B. von der jeweiligen Steuerungseinheit 9A, 9B an eine übergeordnete Steuerungseinheit gesendet und von dieser verarbeitet wird, beispielsweise von der Steuerungseinheit eines Schweißroboters. Die Steuerungseinheit des Schweißroboters kann dann in Abhängigkeit des Signals reagieren und z.B. einen Reinigungsvorgang der Schweißvorrichtung 1 initiieren.

In Fig.3 ist eine zweite Ausführungsform der Erfindung anhand eines Diagramms der Schweißströme IA, IB als Schweißparameter Pi der (hier) zwei Schweißstromkreise über der Zeit t dargestellt. In diesem Beispiel wird mit beiden Schweißgeräten A, B jeweils ein Impulsschweißprozess durchgeführt, natürlich könnten aber auch andere bekannte Schweißprozesse durchgeführt werden, beispielsweise ein Kurzlichtbogenschweißprozess, Sprühlichtbogenschweißprozess, Schweißprozess mit reversierendem Schweißdrahtvorschub (sogenannter Kalt-Metall-Transfer-Schweißprozess), rotierender Lichtbogen etc. Es wäre auch denkbar, dass verschiedene Schweißprozesse kombiniert werden, also z.B. ein Impulsschweißprozess mit Schweißgerät A und ein Sprühlichtbogenschweißprozess mit Schweißgerät B. Die verschiedenen Schweißprozesse sind dem Fachmann bekannt. Die durchgezogene Linie stellt den Verlauf des Schweißstroms IA des Schweißgeräts A dar, die mit Markern versehene Linie den Verlauf des Schweißstroms IB Schweißgeräts B.

Während des beispielhaft dargestellten Impulsschweißens wechseln sich ein Grundstrom IG und ein demgegenüber erhöhter Impulsstrom IP periodisch mit einer vorgegebenen Impulsfrequenz f ab. Die Impulsfrequenz f ergibt sich als Kehrwert der Periodendauer tSA, tSB eines Schweißzyklus SA, SB bestehend aus einer Impulsstromphase PP mit dem Impulsstrom IP und einer Grundstromphase PG mit dem Grundstrom IG. Vorzugsweise wird während der Impulsstromphase PP jeweils ein Schweißtropfen in das Schmelzbad 15 abgelöst. Während eines Schweißprozesses kann sich die Impulsfrequenz f und/oder der Wert des Grundstromes IG oder Impulsstromes IP auch ändern. Die zeitlichen Verläufe der Schweißströme IG, IP sind in Fig.3 natürlich idealisiert und vereinfacht dargestellt. Oftmals sind in der Grundstromphase PG (nicht dargestellte) kurze Zwischenstromimpulse vorgesehen, um die Prozessstabilität zu erhöhen. Das ändert aber nichts an der Periodendauer tSA, tSB eines Schweißzyklus SA, SB und an der sich daraus ergebenden Impulsfrequenz fA, fB.

In Abhängigkeit vom Drahtdurchmesser und Elektrodenwerkstoff werden die Schweißdrahtvorschubgeschwindigkeit vA, vB, die Schweißströme IA, IB, die Grundstrom- und Pulsstromdauern und die Impulsfrequenz fA, fB des jeweiligen Impulsschweißprozesses vorzugsweise so aufeinander abgestimmt, dass bei jedem Stromimpuls ein Tropfen erzeugt und abgelöst wird. Schweißdrahtvorschubgeschwindigkeit vA, vB und Impulsfrequenz fA, fB sind dabei in der Regel voneinander abhängig. Die Verläufe der Schweißströme IA, IB in Fig.3 weisen gleiche große Grundströme IGA=IGB, aber verschiedene Impulsströme IPA ≠ IPB auf, zudem unterscheiden sich die Periodendauern tSA > tSB der Schweißzyklen SA, SB. Die Verläufe könnten aber natürlich auch identisch sein mit oder ohne einer zeitlichen Phasenverschiebung der Schweißzyklen SA, SB. Die Einstellung der verschiedenen Schweißparameter Pi können beispielsweise über die Benutzerschnittstellen 10A, 10B vorgenommen werden und werden vorteilhafter Weise vom Benutzer den jeweiligen Anforderungen des durchzuführenden Mehrfach-Schweißverfahrens angepasst. Beispielsweise können auch bestimmte voreingestellte Schweißprogramme gespeichert sein, die vom Benutzer ausgewählt werden können. Über die optionale Kommunikationsverbindung 11 können die Steuerungseinheiten 9A, 9B Synchronisationsinformationen Y austauschen, um die Impulsschweißprozesse zu synchronisieren.

Zur Erkennung einer elektrisch leitenden Verbindung 20 zwischen den (hier) zwei Schweißstromkreisen, insbesondere durch eine Spritzer-Brücke hervorgerufen, ist vorgesehen, dass während des Mehrfach-Schweißverfahrens in jedem Schweißstromkreis ein elektrischer Schweißparameter Pi erfasst wird, wobei die elektrisch leitende Verbindung 20 zwischen den zumindest zwei Schweißstromkreisen erkannt wird, wenn sich die zumindest zwei erfassten Schweißparameter Pi zeitgleich ändern. Dabei handelt es sich natürlich um eine Änderung, die nicht vom Schweißprozess selbst herrührt, beispielsweise eine Flanke eines Stromimpulses in einem Impulsschweißprozess. Die Änderung kann beispielsweise im Wesentlichen sprunghaft erfolgen, wie in Fig.3 dargestellt ist, könnte aber auch einen flacheren Anstieg aufweisen, z.B. stetig steigend.

Bei dem dargestellten Beispiel handelt es sich um ein stromgeführtes Verfahren, das bedeutet, dass der Schweißstrom IA, IB von der jeweiligen Steuerungseinheit 9A, 9B geregelt wird und sich die Schweißspannung UA, UB in Abhängigkeit des Widerstands im Schweißstromkreis ergibt. In diesem Fall kann zwar auch der Schweißstrom IA, IB als Schweißparameter Pi zur Erkennung der elektrisch leitenden Verbindung 20 verwendet werden, vorteilhafterweise wird aber ein anderer Schweißparameter Pi als der Schweißstrom IA, IB zur Erkennung der elektrisch leitenden Verbindung 20 herangezogen, beispielsweise die Schweißspannung UA, UB, der Schweißwiderstand oder die Periodendauern tSA, tSB, Impulsfrequenz fA, fB, etc. Wenn beispielsweise ein spannungsgeführtes Verfahren verwendet wird, wird vorzugsweise ein anderer Schweißparameter Pi als die Schweißspannung UA, UB zur Erkennung der elektrisch leitenden Verbindung 20 herangezogen. Es wäre aber auch ein Mischbetrieb zwischen stromgeführt und spannungsgeführt denkbar, bei dem sowohl im Schweißstrom IA, IB, als auch in der Schweißspannung UA, UB gewisse Abweichungen zulässig sind. Als Schweißparamater Pi zur Erkennung der elektrisch leitenden Verbindung 20 wird dann vorzugsweise die Schweißspannung UA, UB verwendet.

Der Einfachheit halber ist das erfindungsgemäße Verfahren in Fig.3 aber anhand des Schweißstroms IA, IB als erfasster Schweißparameter Pi dargestellt. Im gezeigten Beispiel in tritt zum Zeitpunkt tX zeitgleich in beiden Schweißstromkreisen eine im Wesentlichen sprunghafte Veränderung des jeweiligen Schweißstroms IA, IB auf, was auf eine elektrisch leitende Verbindung 20 zwischen den Schweißstromkreisen schließen lässt. Es erfassen also im gezeigten Beispiel beide Steuerungseinheiten 9A, 9B jeweils kontinuierlich den Schweißstrom IA, IB als Schweißparameter Pi und tauschen die Information z.B. über die Kommunikationsverbindung 11 aus. Zumindest eine Steuerungseinheit 9A, 9B vergleicht die erfassten Verläufe um eine zeitgleiche, insbesondere sprunghafte Änderung der Schweißparameter Pi (hier IA, IB) zu erkennen. Unter zeitgleich ist hier natürlich nicht zu verstehen, dass die Änderungen zwingend exakt gleichzeitig stattfinden müssen, sondern es können natürlich gewisse geringe zeitliche Verzögerungen auftreten. Beispielsweise kann eine solche zeitliche Verzögerung aus Induktivitäten in den Schweißstromkreisen, aus Latenzzeiten eines Analog-Digital-Wandlers oder ganz allgemein aus der Trägheit des elektrischen Systems resultieren. Im Rahmen der Erfindung ist deshalb unter zeitgleich allgemein zu verstehen, dass der Beginn der voneinander abhängigen sprunghaften Änderungen der erfassten Schweißparameter Pi in den Schweißstromkreisen (hier der beiden Schweißströme IA, IB) innerhalb weniger Millisekunden liegt.

Denkbar wäre hier aber auch, dass eine bestimmte zeitliche Toleranz ±Δt vorgegeben oder eingestellt werden kann, innerhalb der die auftretenden abweichen können, um trotzdem als zeitgleich identifiziert zu werden. Die zeitliche Toleranz ±Δt könnte beispielsweise im Prüfprogramm fest vorgegeben oder über die Benutzerschnittstellen 10A, 10B einstellbar sein. Wie im ersten Ausführungsbeispiel könnte auch hier in analoger Weise wieder ein absoluter oder relativer Schwellenwert WS für den erfassten Schweißparameter Pi, hier z.B. ±IA, ±IB vorgesehen werden, der zur Erkennung einer elektrisch leitenden Verbindung 20 zwischen den Schweißstromkreisen erreicht oder überschritten werden muss. Beispielsweise könnte im gezeigten Beispiel statt dem Schweißstrom IA, IB auch die Impulsfrequenz fA, fB herangezogen werden, um eine elektrisch leitende Verbindung 20 zwischen den Schweißstromkreisen zu erkennen. Die Impulsfrequenz fA, fB ist grundsätzlich bekannt, beispielsweise aus einem vorgegebenen Impulsschweißprozess oder ist oder einstellbar. Wenn sich die Impulsfrequenz fA, fB in den Schweißstromkreisen nun gleichzeitig ändert, kann diese Änderung zur Erkennung der elektrisch leitenden Verbindung 20 zwischen den Schweißstromkreisen benützt werden.

Die Kommunikationsverbindung 11 zwischen den Schweißgeräten A, B ist für beide Ausführungsformen des Verfahrens nicht zwingend notwendig, sie ist aber natürlich vorteilhaft. Bei der ersten Ausführungsform könnte beispielsweise in einem der Schweißstromkreise der Prüfparameter (z.B. eine Prüfspannung Uip) angelegt werden und im jeweils anderen Schweißstromkreis der Schweißparamater Pi erfasst werden, ohne dass ein Austausch einer Synchronisationsinformation Y erfolgen muss. Wenn eine Kommunikationsverbindung 11 zwischen den Schweißgeräten A, B vorgesehen ist, könnte diese aber in vorteilhafter Weise dazu genutzt werden, dass die Steuerungseinheit 9i des Schweißstromkreises, an den der Prüfparameter angelegt wird, auch die Auswertung des im jeweils anderen Schweißstromkreis erfassten Schweißparameters Pi übernimmt, um die elektrisch leitende Verbindung 20 zu erkennen. Es könnte aber z.B. auch eine externe Prüfeinheit in der Schweißvorrichtung 1 vorgesehen sein, die mit den Steuerungseinheiten 9i verbunden ist, um die elektrisch leitenden Verbindung 20 zu erkennen.

Bei der zweiten Ausführungsform könnte der Vergleich und die Auswertung der in beiden (oder mehreren) Schweißstromkreisen erfassten Schweißparameter Pi zur Erkennung der elektrisch leitenden Verbindung 20 beispielsweise auch von einer externen Prüfeinheit durchgeführt werden. Dazu übermittelt die Steuerungseinheiten 9i der Schweißstromkreise jeweils die erfassten Schweißparameter Pi an die externe Prüfeinheit (beispielsweise über eine geeignete drahtlose oder drahtgebundene Schnittstelle) und die externe Prüfeinheit vergleicht die erfassten Schweißparameter Pi und erkennt das Vorliegen einer elektrisch leitenden Verbindung, wenn zeitgleich eine Änderung der Schweißparameter Pi auftritt (wobei natürlich solche Änderungen außer Acht bleiben, die sich aufgrund der durchgeführten Schweißprozesse ergeben). Die externe Prüfeinheit kann dabei z.B. eine übergeordnete Steuerungseinheit sein, beispielsweise eines Schweißroboters, etc. Wenn eine Kommunikationsverbindung 11 zwischen den Schweißgeräten A, B vorgesehen ist, kann diese aber in vorteilhafter Weise dazu genutzt werden, um die elektrisch leitende Verbindung 20 ohne externe Prüfeinheit zu detektieren, wie bereits ausführlich beschrieben wurde.

Wenn eine elektrisch leitende Verbindung 20 zwischen den Schweißstromkreisen erkannt wurde, kann das Mehrfach-Schweißverfahren beispielsweise gestoppt werden und der Benutzer könnte z.B. zur Reinigung der Schweißvorrichtung 1 aufgefordert werden. Denkbar wäre, dass hierfür wiederum mittels einer geeigneten Signalisierungseinheit ein vorzugsweises analoges, digitales, akustisches, optisches oder haptisches Signal erzeugt wird. Der Benutzer kann dann die Schweißvorrichtung kontrollieren und allfällige Spritzer-Brücken entfernen. Wie bereits erläutert könnte bei einer automatisierten Schweißanalage, in welcher der Schweißbrenner 4 von einem Schweißroboter bewegt wird, auch eine separate Reinigungsstation mit einer geeigneten Reinigungseinrichtung vorgesehen sein. Nach Erkennung der elektrischen leitenden Verbindung 20 zwischen den Schweißstromkreisen könnte der Schweißroboter den Schweißbrenner 4 beispielsweise automatisiert in die Reinigungsstation bewegen und dort mit der Reinigungseinrichtung von Spritzer-Brücken befreit werden. Dies kann natürlich ebenfalls durch einen automatisierten Reinigungsvorgang erfolgen oder aber manuell durch einen Benutzer.

Bei Erkennung der elektrisch leitenden Verbindung 20 zwischen den Schweißstromkreisen muss das Mehrfach-Schweißverfahren aber nicht zwangsläufig unterbrochen werden. Es wäre auch möglich, dass eine gerade durchgeführte Schweißarbeit, beispielsweise eine oder mehrere Schweißnähte, beendet wird und erst danach der Schweißbrenner gereinigt wird. Beispielsweise kann unter Umständen eine Schweißnaht trotz etwaig instabiler Schweißprozesse an den Elektroden fertiggestellt werden, anstatt das Mehrfach-Schweißverfahren während der Erzeugung der Schweißnaht zu unterbrechen. Dies kann trotz einer allfälligen verminderten Schweißqualität vorteilhaft sein, um unerwünschte Unterbrechungen in einer Schweißnaht zu vermeiden.

In Fig.4 ist zum besseren Verständnis der Erfindug noch ein vereinfachtes elektrisches Ersatzschaltbild einer Schweißvorrichtung 1 dargestellt, die im Wesentlichen der in Fig.1 dargestellten Schweißvorrichtung 1 entspricht. Die Schweißvorrichtung 1 ist in Fig.4 nur angedeutet und zeigt lediglich die wesentlichen Komponenten der Schweißstromkreise. In bekannter Weise sind die beiden Schweißstromquellen 2A, 2B der beiden (nicht dargestellten) Schweißgeräte A, B mittels Stromleitungen 13A, 13B mit dem gemeinsamen Schweißbrenner 4 verbunden, insbesondere mit den daran vorgesehenen Kontaktrohre 18A, 18B. In den Kontaktrohren 18A, 18B werden die Schweißdrähte 3A, 3B (als abschmelzende Elektroden EA, EB) einem Werkstück 6 zugeführt. Die Schweißdrähte 3A, 3B werden hier jeweils einer eigenen Schweißstelle 15A, 15B zugeführt und jeweils durch einen Lichtbogen LA, LB abgeschmolzen. Natürlich könnte aber wiederum eine gemeinsame Schweißstelle 15 für beide Schweißdrähte 3A, 3B vorgesehen sein. Um die beiden Schweißstromkreise zu schließen sind die Schweißstromquellen 2A, 2B jeweils mittels einer Masseleitung 8A, 8B mit dem Werkstück 6 verbunden.

Im Ersatzschaltbild sind die beiden im Normalfall getrennten Schweißstromkreise dargestellt, wobei jeder Schweißstromkreis eine elektrische Spannungsquelle 2A, 2B (=Schweißstromquelle 2A, 2B) sowie Ohm'sche Ersatzwiderstände Ri aufweist. Die Spannungsquellen 2A, 2B stellen im Betrieb die Schweißspannung UA, UB zur Verfügung, wodurch der Schweißstrom IA, IB im jeweiligen Schweißstromkreis fließt, z.B. wie in Fig.3 anhand der Impulsschweißprozesse dargestellt ist. Als Ersatzwiderstände sind hier vereinfacht nur die wesentlichen Einzelwiderstände dargestellt. Das sind jeweils ein Lichtbogenwiderstand RLA, RLB der Lichtbögen LA, LB, ein Schweißdrahtwiderstand R3A, R3B der Schweißdrähte 3A, 3B sowie ein Leitungswiderstand R13A, R13B der Stromleitungen 13A, 13B. Natürlich könnten auch noch weitere Widerstände Ri, z.B. ein Masseleitungswiderstand R8A, R8B oder ein Werkstückwiderstand R6 oder ein Innenwiderstand RAi, RBi berücksichtigt werden, auf deren Darstellung hier aber verzichtet wurde.

Wenn zwischen den Kontaktrohen 18A, 18B nun eine Spritzer-Brücke vorliegt, führt dies wie beschrieben zu einer elektrisch leitenden Verbindung 20, wie in Fig.4 durch die zentrale Verbindung der beiden Schweißstromkreisen, jeweils zwischen dem Leitungswiderstand 13A, 13B und dem Schweißdrahtwiderstand R3A, R3B angedeutet ist. Der Ohm'sche Verbindungswiderstand R20 der elektrisch leitenden Verbindung 20 ist hier als veränderlicher Widerstand dargestellt, da dieser je nach Größe und Gestalt der Spritzer-Brücke variieren kann. Wenn der Verbindungswiderstand R20 der elektrisch leitenden Verbindung 20 vernachlässigbar gering ist, bedeutet das im Wesentlichen, dass ein Kurzschluss zwischen den beiden Schweißstromkreisen vorliegt. Grundsätzlich gilt, je größer und dichter die Spritzer-Brücke ist, desto geringer wird auch der Verbindungswiderstand R20 der elektrisch leitenden Verbindung 20 sein.

Gemäß der ersten Ausführungsform wird (vor Beginn oder Nach Beendigung des Mehrfach-Schweißverfahrens) in einem der beiden Schweißstromkreise ein Prüfparameter (z.B. eine Prüfspannung Uip) angelegt und im jeweils anderen Schweißstromkreis wird gleichzeitig ein Schweißparameter Pi erfasst, beispielsweise von der jeweiligen (nicht dargestellten) Steuerungseinheit 9i oder einer geeigneten Messeinrichtung. Im Normalfall sind die beiden Schweißstromkreise voneinander elektrisch isoliert, weshalb die Erfassung des Schweißparameters Pi ein Ergebnis liefert, welches das vorgegebene Prüfkriterium nicht erfüllt (beispielsweise, weil eine gemessene Spannung Ui als Schweißparameter Pi unterhalb einer vorgegebenen Schwellenspannung UiS als Prüfkriterium liegt). Wenn nun allerdings, sowie in Fig.4 dargestellt, eine Spritzer-Brücke zwischen den Kontaktrohren 18A, 18B vorliegt, fließt ein bestimmter Verbindungsstrom I20 über die elektrisch leitende Verbindung 20 in den jeweils anderen Schweißstromkreis, wodurch der erfasste Schweißparameter Pi im anderen Schweißstromkreis beeinflusst wird.

Diese Beeinflussung kann durch das vorgegebene Prüfkriterium erkannt werden und daraus auf das Vorliegen einer Spritzer-Brücke geschlossen werden. Beispielsweise könnte eine vorgegebene Schwellenspannung UiS als Prüfkriterium vorgegeben werden und die Spritzer-Brücke erkannt werden, wenn die gemessene Spannung Ui (als der erfasste Schweißparameter Pi) die vorgegebene Schwellenspannung UiS erreicht oder übersteigt. Die Höhe und der Verlauf des Stroms I20 und des erfassten Schweißparameters Pi ergeben sich dabei aus den elektrischen Gesetzmäßigkeiten und sind im Wesentlichen abhängig von der Höhe und Art des Prüfparameters (z.B. Prüfspannung Uip in Form einer konstanten Spannung, einer zeitlich veränderlichen Funktion, etc.), dem Verbindungswiderstand R20 und von den tatsächlichen Widerständen Ri der Schweißstromkreise. Der Verbindungswiderstand R20 der elektrisch leitenden Verbindung 20 stellt sich dabei im Wesentlichen in Abhängigkeit von der Größe, der Zusammensetzung und Struktur der Spritzer-Brücke ein.

In der zweiten Ausführungsform wird (während der Durchführung des Mehrfach-Schweißverfahrens) in beiden Schweißstromkreisen jeweils ein Schweißparamater Pi erfasst. Im Normalfall (bei elektrisch voneinander isolierten Schweißstromkreisen) weisen die erfassten Schweißparamater Pi bestimmte bekannte zeitliche Verläufe in Abhängigkeit des jeweils durchgeführten Schweißprozesses auf, beispielsweise wie in Fig.3 anhand der zeitlichen Verläufe der Schweißströme IA, IB zweier Impulsschweißprozesse dargestellt ist. Wenn sich nun eine Spritzer-Brücke zwischen den Kontaktrohren 18A, 18B am Schweißbrenner 4 ausbildet wird dadurch eine elektrisch leitenden Verbindung 20 mit einem Verbindungswiderstand R20 zwischen den Schweißstromkreisen hergestellt, wodurch sich die beiden Schweißstromkreise gegenseitig elektrisch beeinflussen. Die Spritzer-Brücke wird dadurch erkannt, dass sich in beiden Schweißstromkreisen im Wesentlichen zeitgleich eine Änderung des erfassten Schweißparameters Pi auftritt, wie in Fig.3 zum Zeitpunkt tX angedeutet ist. An dieser Stelle sei nochmals angemerkt, dass es sich bei der zeitgleichen Änderung der Schweißparameter Pi natürlich nur um solche Änderungen handelt, die nicht durch die durchgeführten Schweißprozesse selbst bedingt sind, deren zeitliche Verläufe der Schweißparameter Pi vorgegebenen bzw. bekannt sind. Eine zeitgleiche Änderung der erfassten Schweißparameter Pi, die von einer elektrisch leitenden Verbindung 20 zwischen den Schweißstromkreisen herrührt, ist also beispielsweise nicht eine bewusste bzw. erwartete Änderung der Schweißparameter Pi aufgrund des durchgeführten Schweißprozesses, die bloß zufällig gleichzeitig stattfindet.

Bei einer elektrisch leitenden Verbindung 20 mit einem relativ geringen (im Wesentlichen vernachlässigbaren) Verbindungswiderstand R20 (entspricht im Wesentlichen einem Kurzschluss) ist die Höhe der Änderung des erfassten Schweißparameters Pi (Schweißstrom I, Schweißspannung U, Schweißleistung PSi, etc.) in beiden Schweißstromkreisen dabei in etwa gleich groß. Eine Spritzerbrücke kann aber auch einen gewissen (nicht vernachlässigbaren) Verbindungswiderstand R20 haben, der dazu führen kann, dass die Höhe der Änderungen der erfassten Schweißparameter Pi in den Schweißstromkreisen auch unterschiedlich sein kann (ergibt sich aus den bekannten Gesetzmäßigkeiten des Spannungsteilers). Die Änderung der erfassten Schweißparameter Pi tritt jedoch jedenfalls in beiden Schweißstromkreisen zeitgleich auf, wie in Fig.3 dargestellt ist, wodurch das Vorliegen einer Spritzer-Brücke erkannt wird.

Das beschriebene Verfahren kann natürlich auch auf eine Schweißvorrichtung 1 mit mehr als zwei Schweißgeräten A, B, ...k angewandt werden und/oder auf eine Schweißvorrichtung 1 mit einer oder mehreren nicht-abschmelzenden Elektroden (WIG).

## Patentansprüche

1. Verfahren zur Durchführung eines Mehrfach-Schweißverfahrens, bei dem an einem Werkstück (6) mit zumindest zwei Elektroden (EA, EB) mit jeweils einem Schweißstromkreis jeweils ein Schweißprozess durchgeführt wird, **dadurch gekennzeichnet, dass** vor Beginn oder nach Beendigung des Mehrfach-Schweißverfahrens ein Prüfparameter an einen der zumindest zwei Schweißstromkreise angelegt wird und in zumindest einem anderen Schweißstromkreis zumindest ein elektrischer Schweißparameter (Pi) erfasst wird, wobei eine elektrisch leitende Verbindung (20) zwischen den zumindest zwei Schweißstromkreisen erkannt wird, wenn der erfasste Schweißparameter (Pi) vom Prüfparameter beeinflusst wird und ein vorgegebenes Prüfkriterium erfüllt **oder dass** während des Mehrfach-Schweißverfahrens in jedem Schweißstromkreis zumindest ein elektrischer Schweißparameter (Pi) erfasst wird, wobei eine elektrisch leitende Verbindung (20) zwischen den zumindest zwei Schweißstromkreisen erkannt wird, wenn sich die erfassten Schweißparameter (Pi) zeitgleich ändern.

2. Verfahren nach Anspruch 1, **dadurch gekennzeichnet, dass** für zumindest eine Elektrode (EA, EB) eine abschmelzende Elektrode in Form eines Schweißdrahts (3A, 3B) vorgesehen wird, wobei der Schweißdraht (3A, 3B) einer Schweißstelle (15) am Werkstück (6) zugeführt und durch einen vom jeweiligen Schweißprozess gesteuerten, zwischen dem Schweißdraht (3A, 3B) und dem Werkstück (6) brennenden Lichtbogen an der Schweißstelle abgeschmolzen wird, um eine Schweißnaht auszubilden.

3. Verfahren nach Anspruch 1 oder 2, **dadurch gekennzeichnet, dass** für zumindest eine Elektrode (EA, EB) eine nicht abschmelzende Elektrode vorgesehen wird, wobei einer Schweißstelle am Werkstück (6) ein Zusatzstoff zugeführt wird und wobei der Zusatzstoff durch einen vom jeweiligen Schweißprozess gesteuerten, zwischen der nicht abschmelzende Elektrode und dem Werkstück (6) brennenden Lichtbogen an der Schweißstelle abgeschmolzen wird, um eine Schweißnaht auszubilden.

4. Verfahren nach einem der Ansprüche 1 bis 3, **dadurch gekennzeichnet, dass** für zumindest einen Schweißprozess einer Elektrode (EA, EB) ein Impulsschweißprozess, ein Schweißprozess mit reversierendem Schweißdrahtvorschub, ein Sprühlichtbogenschweißprozess, ein Schweißprozess mit rotierendem Lichtbogen oder ein Kurzlichtbogenschweißprozess verwendet wird.

5. Verfahren nach einem der Ansprüche 1 bis 4, **dadurch gekennzeichnet, dass** als elektrischer Schweißparameter (Pi) ein Schweißstrom (IA, IB), eine Schweißspannung (UA, UB), ein Schweißwiderstand oder eine Periodendauer (tSA, tSB) oder Impulsfrequenz (fA, fB) eines Schweißzyklus (SA, SB) eines Schweißprozesses verwendet wird oder eine davon abgeleitete Größe, vorzugsweise eine Schweißleistung (PSA, PSB) und/oder dass als Prüfparameter eine Prüfspannung (Uip), ein Prüfstrom oder eine davon abgeleitete Größe vorgesehen wird.

6. Verfahren nach einem der Ansprüche 1 bis 5, **dadurch gekennzeichnet, dass** an zumindest einer Elektrode (EA, EB) ein stromgeführter Schweißprozess verwendet wird, bei dem ein Schweißstrom (IA, IB) des Schweißstromkreises geregelt wird oder ein spannungsgeführter Schweißprozess verwendet wird, bei dem eine Schweißspannung (UA, UB) des Schweißstromkreises geregelt wird, wobei beim stromgeführten Schweißprozess ein vom Schweißstrom (IA, IB) verschiedener elektrischer Schweißparameter (Pi) erfasst wird und beim spannungsgeführten Schweißprozess ein von der Schweißspannung (UA, UB) verschiedener elektrischer Schweißparameter (Pi) erfasst wird, um die elektrisch leitende Verbindung (20) zu erkennen.

7. Verfahren nach einem der Ansprüche 1 bis 6, **dadurch gekennzeichnet, dass** bei Erkennung der elektrisch leitenden Verbindung (20) zwischen den zumindest zwei Schweißstromkreisen vor Beginn oder nach Beendigung des Mehrfach-Schweißverfahrens ein vorzugsweise analoges, digitales, akustisches, optisches oder haptisches Signal erzeugt wird **und/oder dass** bei Erkennung der elektrisch leitenden Verbindung (20) zwischen den zumindest zwei Schweißstromkreisen während des durchgeführten Mehrfach-Schweißverfahrens das Mehrfach-Schweißverfahren unterbrochen wird und/oder ein vorzugsweise analoges, digitales, akustisches, optisches oder haptisches Signal erzeugt wird.

8. Schweißvorrichtung (1) zur Durchführung eines Mehrfach-Schweißverfahrens, wobei in der Schweißvorrichtung (1) zumindest zwei Elektroden (EA, EB) mit jeweils einem eigenen Schweißstromkreis und jeweils einer Steuerungseinheit (9A, 9B) vorgesehen sind, wobei die Steuerungseinheiten (9A, 9B) vorgesehen sind, die Schweißstromkreise der Elektroden (EA, EB) zu steuern, um an einem Werkstück (6) jeweils einen Schweißprozess mit den Elektroden durchzuführen, **dadurch gekennzeichnet, dass** die Steuerungseinheit (9A, 9B) zumindest einer Elektrode (EA, EB) dazu vorgesehen ist, vor Beginn oder nach Beendigung des Mehrfach-Schweißverfahrens ein Prüfparameter an den Schweißstromkreis der jeweiligen Elektrode (EA, EB) anzulegen und dass die Steuerungseinheit (9A, 9B) zumindest einer anderen Elektrode (EA, EB) dazu vorgesehen ist, zumindest einen elektrischen Schweißparameter (Pi) im Schweißstromkreis der jeweiligen Elektrode (EA, EB) zu erfassen und wobei die Schweißvorrichtung (1) vorgesehen ist, eine elektrisch leitende Verbindung (20) zwischen den zumindest zwei Schweißstromkreisen zu erkennen, wenn der erfasste Schweißparameter (Pi) vom Prüfparameter beeinflusst ist und ein vorgegebenes Prüfkriterium erfüllt ist **oder dass** die Steuerungseinheiten (9A, 9B) der zumindest zwei Elektroden (EA, EB) dazu vorgesehen sind, während des Mehrfach-Schweißverfahrens jeweils zumindest einen elektrischen Schweißparameter (Pi) in ihrem Schweißstromkreis zu erfassen und die Schweißvorrichtung (1) vorgesehen ist, eine elektrisch leitende Verbindung (20) zwischen den zumindest zwei Schweißstromkreisen zu erkennen, wenn sich die erfassten Schweißparameter (Pi) zeitgleich ändern.

9. Schweißvorrichtung (1) nach Anspruch 8, **dadurch gekennzeichnet, dass** die Steuerungseinheiten (9A, 9B) mittels einer Kommunikationsverbindung (11) miteinander verbunden sind, um eine Synchronisationsinformation (Y) auszutauschen, wobei die Steuerungseinheit (9A, 9B) zumindest einer anderen Elektrode (EA, EB) dazu vorgesehen ist, die elektrisch leitende Verbindung (20) zwischen den zumindest zwei Schweißstromkreisen zu erkennen **oder dass** in der Schweißvorrichtung (1) eine Prüfeinheit zur Erkennung der elektrisch leitenden Verbindung (20) zwischen den zumindest zwei Schweißstromkreisen vorgesehen ist, die mit den Steuerungseinheiten (9A, 9B) verbunden ist.

10. Schweißvorrichtung (1) nach Anspruch 8 oder 9, **dadurch gekennzeichnet, dass** als zumindest eine Elektrode (EA, EB) eine abschmelzende Elektrode in Form eines Schweißdrahts (3A, 3B) vorgesehen ist, wobei an der Schweißvorrichtung (1) eine Schweißdrahtvorschubeinheit (14A, 14B) vorgesehen ist, um den Schweißdraht (3A, 3B) einer Schweißstelle am Werkstück (6) zuzuführen und dass die Steuerungseinheit (9A, 9B) der abschmelzenden Elektrode vorgesehen ist, den Schweißprozess zu steuern, um den Schweißdraht (3A, 3B) mittels eines zwischen dem Schweißdraht und dem Werkstück (6) brennenden Lichtbogen an der Schweißstelle abzuschmelzen, um eine Schweißnaht auszubilden.

11. Schweißvorrichtung (1) nach einem der Ansprüche 8 bis 10, **dadurch gekennzeichnet, dass** als zumindest eine Elektrode (EA, EB) eine nicht abschmelzende Elektrode vorgesehen ist, wobei an der Schweißvorrichtung (1) eine Zuführeinheit vorgesehen ist, um einen Zusatzstoff einer Schweißstelle am Werkstück (6) zuzuführen und dass die Steuerungseinheit (9A, 9B) der nicht abschmelzenden Elektrode vorgesehen ist, den Schweißprozess zu steuern, um den Zusatzstoff mittels eines zwischen der nicht abschmelzenden Elektrode und dem Werkstück (6) brennenden Lichtbogen an der Schweißstelle abzuschmelzen, um eine Schweißnaht auszubilden.

12. Schweißvorrichtung (1) nach einem der Ansprüche 8 bis 11, **dadurch gekennzeichnet, dass** als elektrischer Schweißparameter (Pi) ein Schweißstrom (IA, IB), eine Schweißspannung (UA, UB), ein Schweißwiderstand oder eine Periodendauer (tSA, tSB) oder Impulsfrequenz (fA, fB) eines Schweißzyklus (SA, SB) eines Schweißprozesses vorgesehen ist oder eine davon abgeleitete Größe, vorzugsweise eine Schweißleistung (PSA, PSB) und/oder dass als Prüfparameter eine Prüfspannung (Uip), ein Prüfstrom oder eine davon abgeleitete Größe vorgesehen ist.

13. Schweißvorrichtung (1) nach einem der Ansprüche 8 bis 12, **dadurch gekennzeichnet, dass** die Steuerungseinheit (9A, 9B) zumindest einer Elektrode (EA, EB) vorgesehen ist, einen stromgeführten Schweißprozess durchzuführen, bei dem ein Schweißstrom (IA, IB) des Schweißstromkreises geregelt wird oder einen spannungsgeführten Schweißprozess durchzuführen, bei dem eine Schweißspannung (UA, UB) des Schweißstromkreises geregelt wird, wobei der erfasste Schweißparameter (Pi) zur Erkennung der elektrisch leitenden Verbindung (20) zwischen den zumindest zwei Schweißstromkreisen beim stromgeführten Schweißprozess ein vom Schweißstrom (IA, IB) verschiedener elektrischer Schweißparameter (Pi) ist und beim spannungsgeführten Schweißprozess ein von der Schweißspannung (UA, UB) verschiedener elektrischer Schweißparameter (Pi) ist.

14. Schweißvorrichtung (1) nach einem der Ansprüche 8 bis 13, **dadurch gekennzeichnet, dass** zumindest zwei Elektroden (EA, EB) an einem gemeinsamen Schweißbrenner (4) angeordnet sind, wobei der Schweißbrenner (4) manuell oder mit einer Manipulationsvorrichtung relativ zum Werkstück (6) bewegbar ist und/oder dass zumindest zwei Elektroden (EA, EB) jeweils an einem separaten Schweißbrenner (4A, 4B) angeordnet sind, wobei die Schweißbrenner (4A, 4B) manuell oder mit einer Manipulationsvorrichtung relativ zum Werkstück (6) und relativ zueinander bewegbar sind.

15. Schweißvorrichtung (1) nach einem der Ansprüche 8 bis 14, **dadurch gekennzeichnet, dass** in der Schweißvorrichtung (1) eine Signalisierungseinheit vorgesehen ist, um die Erkennung und/oder Nicht-Erkennung einer elektrisch leitenden Verbindung (20) zwischen den zumindest zwei Schweißstromkreisen zu signalisieren, vorzugsweise durch ein analoges, digitales, akustisches, optisches oder haptisches Signal.
